# EUROPÄISCHE PATENTSCHRIFT

(11) **EP 1 880 120 B1**
(45) Veröffentlichungstag und Bekanntmachung des Hinweises auf die Patenterteilung: **11.08.2010**
(21) Anmeldenummer: 06724024.2
(22) Anmeldetag: 05.04.2006
(51) Int. Cl.: F16H 3/091

(54) **FAHRZEUGGETRIEBE MIT SECHS VORWÄRTSGÄNGEN FÜR NORMALEN FAHRBETRIEB, SOWIE EINEM KRIECH- BZW. BERGANFAHRGANG UND EINEM RÜCKWÄRTSGANG**
MOTOR VEHICLE GEARBOX WITH SIX FORWARD GEARS FOR NORMAL DRIVING, AND WITH A CRAWLING GEAR OR HILL GEAR AND A REVERSE GEAR
BOITE DE VITESSES POUR VEHICULE COMPRENANT SIX VITESSES AVANT POUR UN FONCTIONNEMENT NORMAL, UNE VITESSE TOUT TERRAIN OU UNE VITESSE SPECIALE COTES, AINSI QU'UNE VITESSE ARRIERE

(30) Priorität: 11.05.2005 DE 102005021674
(43) Veröffentlichungstag der Anmeldung: 23.01.2008
(73) Patentinhaber: Bayerische Motoren Werke Aktiengesellschaft, 80809 München (DE)
(72) Erfinder: OHNEMUS, Ulrich, 82285 Hattenhofen (DE)
(86) Internationale Anmeldenummer: PCT/EP2006/003069
(87) Internationale Veröffentlichungsnummer: WO 2006/119829

(56) Entgegenhaltungen:
- EP-A- 1 279 862
- DE-A1- 2 822 617
- DE-A1- 10 114 557
- DE-A1- 10 143 994
- DE-A1- 10 310 472
- DE-C- 923 402
- GB-A- 2 103 317
- US-A- 3 600 963
- US-A- 4 267 741
- PATENT ABSTRACTS OF JAPAN Bd. 004, Nr. 158 (M-039), 5. November 1980 (1980-11-05) & JP 55 107150 A (TOYOTA MOTOR CORP), 16. August 1980 (1980-08-16)
- LOOMAN ET AL VOLLMANN K: "Zahnradgetriebe: Grundlagen und Konstruktion der Vorgelege- und Planetenradgetriebe" 1970, ZAHNRADGETRIEBE. GRUNDLAGEN UND KONSTRUKTION DER VORGELEGE- UND PLANETENRADGETRIEBE, KONSTRUKTIONSBUCHER, BERLIN, SPRINGER, DE, PAGE(S) 174-177,184 , XP002084463 Seite 185

## Beschreibung

Aus der DE 2822617 ist ein Fahrzeuggetriebe mit den Merkmalen des Oberbegriffes des Anspruchs 1 bekannt.

Die vorliegende Erfindung betrifft ein Fahrzeuggetriebe gemäß dem Oberbegriff des Patentanspruches 1.

Moderne Handschaltgetriebe für Fahrzeuge weisen häufig sechs Vorwärtsgänge und einen Rückwärtsgang auf. Der erste Vorwärtsgang ist üblicherweise relativ kurz ausgelegt, d. h. er weist eine große Übersetzung auf. Der erste Gang muss so ausgelegt sein, dass ein Anfahren unter allen in der Praxis auftretenden Fahrbedingungen, insbesondere an steilen Steigungen mit voller Beladung möglich ist. Die im ersten Gang erreichbare Maximalgeschwindigkeit ist daher relativ gering. Folglich muss relativ früh in den zweiten Gang geschaltet werden. Bei den meisten Fahrzeugen mit Handschaltgetriebe muss bei einer Geschwindigkeit von weniger als 100km/h bereits in den dritten Gang geschaltet werden. Unter dem Gesichtspunkt der Verbrauchsminimierung wäre ein länger ausgelegter erster Gang sowie im Hochgeschwindigkeitsbereich mindestens ein "Overdrive-Gang" wünschenswert.

Ein länger ausgelegter "normaler" Anfahrgang mag unter Verbrauchsgesichtspunkten günstig sein. Problematisch ist ein lang ausgelegter erster Gang aber dann, wenn bei voller Beladung am Berg angefahren werden muss.

Aufgabe der Erfindung ist es, ein Getriebe zu schaffen, das in allen in der Praxis auftretenden Fahrsituationen ein zuverlässiges Anfahren ermöglicht und das gegenüber herkömmlichen Getrieben Verbrauchsvorteile bietet. Darüber hinaus soll das Getriebe eine möglichst kompakte Bauweise aufweisen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist die Vorgabe, dass der "normale Fahrbetrieb" durch sechs "normale" Vorwärtsgänge abgedeckt werden soll. Der Begriff "normaler Fahrbetrieb" ist hier so zu verstehen, dass er alle Fahrzustände, insbesondere alle Anfahrzustände umfasst, mit Ausnahme des Anfahrens an extremen Steigungen bzw. an Steigungen bei starker Beladung des Fahrzeugs. Für relativ selten auftretende Fahrsituationen, bei denen an einem Berg mit extremer Steigung oder an einer Steigung mit starker Beladung des Fahrzeugs angefahren werden muss, ist ein Kriech- bzw. Berganfahrgang vorgesehen.

Der Kern der Erfindung besteht darin, einen Kriech- bzw. Berggang in ein herkömmliches Sechsgang-Schaltgetriebe zu integrieren, ohne dass sich die baulichen Abmessungen des Getriebes vergrößern, insbesondere ohne dass eine zusätzliche Radsatzebene benötigt wird. Ein Getriebe gemäß der Erfindung weist eine Eingangswelle, sowie eine koaxial zur Eingangswelle angeordneten Ausgangswelle und eine Nebenwelle auf, die parallel zur Eingangswelle und zur Ausgangswelle angeordnet ist. Entsprechend dem bei BMW derzeit in Serie befindlichen Sechsgang-Handschaltgetriebe weist das Getriebe sieben Radsatzebenen auf. Jede der Radsatzebenen ist durch eine Zahnradstufe gebildet, die jeweils ein erstes Zahnrad und ein darin eingreifendes zweites Zahnrad aufweist. Die Zahnradstufen weisen jeweils ein Zahnrad auf, das drehfest mit der ihm zugeordneten Welle verbunden ist und ein Zahnrad, das drehbar auf der ihm zugeordneten Welle gelagert ist und mittels eines zugeordneten Schaltelements mit der zugeordneten Welle drehkoppelbar ist.

Das Grundprinzip der Erfindung besteht darin, dass eine der Zahnradstufen "doppelt genutzt" wird. Unter dem Begriff "doppelter Nutzung" ist zu verstehen, dass in einem für normalen Fahrbetrieb vorgesehenen Vorwärtsgang Drehmoment von dem einen Zahnrad der Zahnradstufe auf das andere Zahnrad der Zahnradstufe übertragen wird und bei eingelegtem Kriech- bzw. Berggang Drehmoment in umgekehrter Richtung, d. h. von dem "anderen Zahnrad" auf das "eine Zahnrad". Dadurch ist es möglich, ein herkömmliches Sechsgang-Schaltgetriebe um einen Kriech- bzw. Berggang zu erweitern, ohne dass eine zusätzliche Radsatzebene erforderlich wird.

Im folgenden wird die Erfindung im Zusammenhang mit der Zeichnung näher erläutert. Es zeigen:
- Figur 1: ein Sechsgang-Handschaltgetriebe gemäß dem Stand der Technik;
- Figur 2: ein Getriebe gemäß der Erfindung;
- Figuren 3-10: die einzelnen Gangstufen des Getriebes;
- Figur 11: ein Schaltschema für ein Getriebe gemäß der Erfindung.

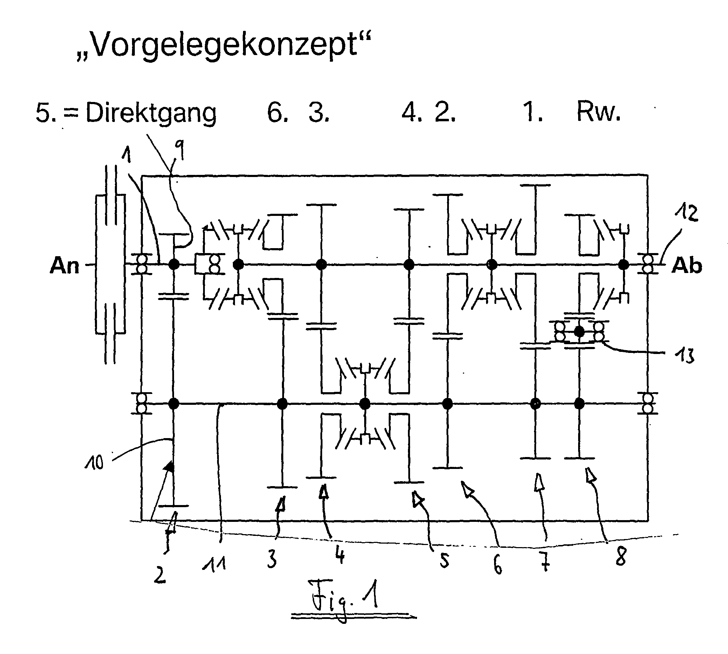

Figur 1 zeigt ein Sechsgang-Handschaltgetriebe, wie es derzeit bei BMW in Serie verbaut wird. Das Getriebe ist in Vorgelegebauweise ausgeführt. Es weist eine Eingangswelle 1 sowie sieben Radsatzebenen auf, die jeweils durch eine Zahnradstufe 2-8 gebildet sind. Die Zahnradstufe 2 ist eine so genannte "Vorgelegekonstante". Sie besteht aus einem drehfest mit der Eingangswelle 1 verbundenen Zahnrad 9 und einem Zahnrad 10, das drehfest mit einer Vorgelegewelle 11 verbunden ist. Die beiden Zahnräder 9, 10 sind permanent in Eingriff. Die Zahnradstufen 3-8 bestehen aus jeweils einem auf der Vorgelegewelle 11 angeordneten Zahnrad und einem auf einer Abtriebswelle 12 angeordneten Zahnrad. Im Unterschied zur Zahnradstufe 2 sind die Zahnradstufen 3-8 schaltbar. Über ein "drittes Zahnrad" 13 kann über die Zahnradstufe 8 ein Rückwärtsgang dargestellt werden.

Das "Vorgelegekonzept" zeichnet sich dadurch aus, dass die schaltbaren Zahnradstufen 3 - 8 in Kraftflussrichtung gesehen hinter der Vorgelegekonstante angeordnet sind. Die Eingangsdrehzahl der Eingangswelle 1 wird über die Vorgelegekonstante 2 verringert, was zur Folge hat, dass über die schaltbaren Zahnradstufen 3-8 relativ große Drehmomente übertragen werden.

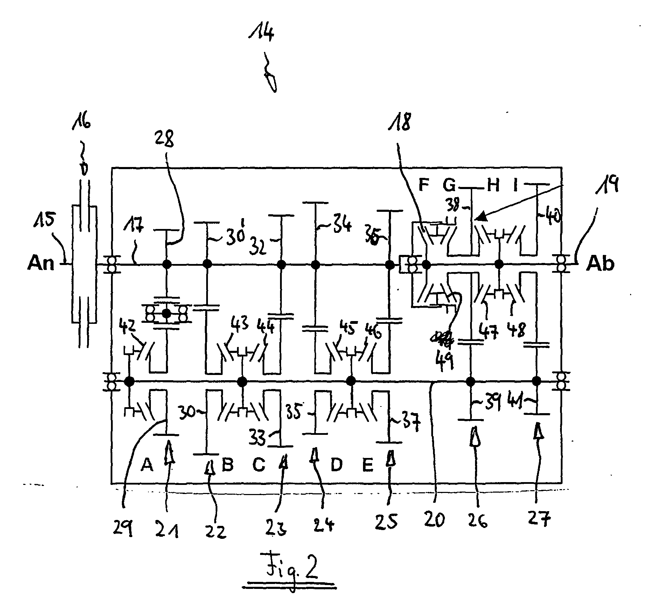

Figur 2 zeigt ein Getriebe 14 gemäß der Erfindung. Das Getriebe 14 weist insgesamt sieben Vorwärtsgänge und einen Rückwärtsgang auf, also einen Vorwärtsgang mehr als das in Figur 1 gezeigte Getriebe. Von den sieben Vorwärtsgängen wird im folgenden ein Vorwärtsgang als "0.-ter Vorwärtsgang" bezeichnet. Der 0.-te Vorwärtsgang ist ein Kriech- bzw. Berganfahrgang. Er ist dazu vorgesehen, entweder mit extrem langsamer Geschwindigkeit zu fahren bzw. an einer extremen Steigung oder an einer Steigung mit starker Beladung des Fahrzeugs anzufahren. Für normale Anfahrvorgänge ist, wie bei einem herkömmlichen Getriebe, der erste Vorwärtsgang vorgesehen. Die Vorwärtsgänge eins bis sechs decken also sämtliche im Normalbetrieb auftretenden Fahrsituationen vom Anfahren aus dem Stand bis zur Höchstgeschwindigkeit sowie einen oder zwei Overdrive-Gänge ab.

In funktionaler Hinsicht besteht der wesentliche Unterschied des in Figur 2 gezeigten Getriebes 14 gegenüber dem in Figur 1 gezeigten Getriebe darin, dass die Vorwärtsgänge 1-6 länger ausgelegt sind. Insbesondere kann der erste Vorwärtsgang länger ausgelegt sein, da er nicht für alle denkbaren Anfahrzustände ausgelegt sein muss, sondern lediglich für die im Normalbetriebe auftretenden Anfahrzustände, nicht aber für das Anfahren an einer extremen Steigung bei starker Beladung des Fahrzeugs. Hierfür ist nämlich der "0.-te Gang" vorgesehen. Insgesamt kann durch die längere Auslegung der einzelnen Fahrgänge eine größere Getriebespreizung und somit ein in noch größerem Maße verbrauchssenkender Overdrive-Gang dargestellt werden als dies der 6.-ten Gang herkömmlicher Getriebe ist. Der höchste Gang kann als "2. Overdrive-Gang", d.h. als extremer Overdrive-Gang ausgelegt sein.

Alternativ dazu ist es denkbar, die Gänge 1 - 6 so auszulegen wie bei einem herkömmlichen 6-Ganggetriebe und den 0.-ten Gang als "Crawler-Gang" für geländegängige Fahrzeuge auszulegen.

Im folgenden wird der konstruktive Aufbau des Getriebes 14 näher erläutert.

Die Kurbelwelle 15 eines hier nicht näher dargestellten Fahrzeugmotors treibt über eine Anfahrkupplung 16 eine Getriebeeingangswelle 17 an. Die Getriebeeingangswelle 17 kann über ein Direktschaltelement 18, bei dem es sich beispielsweise um eine Schiebemuffe handeln kann, mit einer Abtriebswelle 19 drehgekoppelt werden. Wenn die Schiebemuffe 18 geschlossen ist, drehen also die Antriebswelle 17 und die Abtriebswelle 19 mit ein- und derselben Drehzahl. Parallel zu den beiden koaxial angeordneten Wellen 17, 19 ist eine Vorgelegewelle 20 angeordnet.

Entsprechend dem in Figur 1 gezeigten Getriebe weist das Getriebe 14 sieben Radsatzebenen 21 - 27 auf, die jeweils durch eine Zahnradstufe gebildet sind. Die erste Radsatzebene ist durch ein drehfest mit der Getriebeeingangswelle 17 verbundenes Zahnrad 28 und ein drehbar auf der Vorgelegewelle 20 gelagertes Zahnrad 29 gebildet. Die zweite Radsatzebene ist durch ein drehfest auf der Getriebeeingangswelle 17 gelagertes Zahnrad 30 und ein drehbar auf der Vorgelegewelle 20 gelagertes Zahnrad 31 gebildet. Die Radsatzebene 23 ist durch ein drehfest mit der Getriebeeingangswelle 17 verbundenes Zahnrad 32 und ein drehbar auf der Vorgelegewelle 20 gelagertes Zahnrad 33 gebildet. Dementsprechend sind die Radsatzebenen 24, 25 durch ein drehfest auf der Getriebeeingangswelle 17 angeordnetes Zahnrad 34 bzw. 36 und ein zugeordnetes, drehbar auf der Vorgelegewelle 20 gelagertes Zahnrad 35 - 37 gebildet.

Die Zahnradstufen 26, 27 sind durch ein drehbar auf der Abtriebswelle 19 gelagertes Zahnrad 38 bzw. 40 und ein drehfest mit der Vorgelegewelle verbundenes Zahnrad 39 bzw. 41 gebildet. Die Zahnräder 29, 30, 33, 35 und 37 können über zugeordnete Schiebemuffen 42 - 46 mit der Vorgelegewelle 20 drehgekoppelt werden. Die Zahnräder 38 und 40 können über zugeordnete Schiebemuffen 47 bzw. 48 mit der Abtriebswelle 19 drehgekoppelt werden.

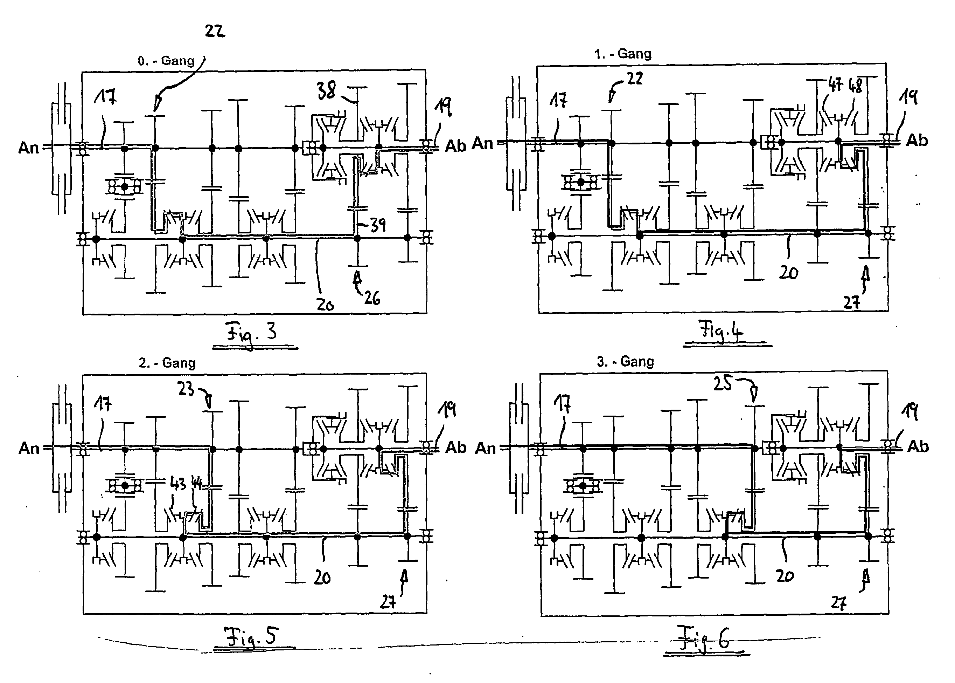

Im Zusammenhang mit den Figuren 3-10 wird der Drehmomentenfluss in den einzelnen Gängen erläutert.

Figur 3 zeigt den Drehmomentenfluss bei eingelegtem Kriech- bzw. Berggang. Von der Getriebeeingangswelle 17 wird das Drehmoment über die Zahnradstufe der Radsatzebene 22 auf die Vorgelegewelle 20 und von dort über die Zahnradstufe der Radsatzebene 26 auf die Abtriebswelle 19 übertragen.

Wenn von dem Kriech- bzw. Berganfahrgang in den normalen Anfahrgang, d. h. in den ersten Gang geschaltet wird, wird durch Verlassen der Schaltposition "0" zuerst das Schaltelement 43 ausgelegt. Anschließend wird durch Überfahren der Neutralposition das Schaltelement 47 ausgelegt und das Schaltelement 48 eingelegt. Wird nun der erste Gang angewählt, wird das Schaltelement 43 wieder eingelegt, so dass sich der in Figur 4. dargestellte Kraftfluss ergibt.

Beim Übergang vom ersten in den zweiten Gang wird die Schiebemuffe 43/44 geschaltet. Im zweiten Gang wird das Drehmoment von der Getriebeeingangswelle 17 über die Radsatzebene 23 auf die Vorgelegewelle 20 und von dort über die Radsatzebene 27 auf die Abtriebswelle 19 übertragen.

Im dritten Gang wird das Drehmoment von der Getriebeeingangswelle 17 über die Radsatzebene 25 auf die Vorgelegewelle 20 übertragen und von dort über die Radsatzebene 27 auf die Abtriebswelle 19.

Der vierte Gang ist ein "Direktgang". Im vierten Gang wird das Drehmoment von der Getriebeeingangswelle 17 über das Direktgangschaltelement 18 unmittelbar auf die Abtriebswelle 19 übertragen.

Die Zuordnung der Gänge 4 und 5 kann auch vertauscht sein, d.h. der fünfte Gang kann ein Direktgang sein.

Im fünften Gang wird das Drehmoment von der Getriebeeingangswelle 17 über die Radsatzebene 24 auf die Vorgelegewelle 20 übertragen und von dort über die Radsatzebene 27 auf die Abtriebswelle 19.

Im sechsten Gang wird das Drehmoment von der Getriebeeingangswelle 17 über eine Schiebemuffe 49 auf das Zahnrad 38 der Radsatzebene 26 übertragen. Das über die Radsatzebene 26 auf die Vorgelegewelle 20 übertragene Drehmoment wird über die Radsatzebenen 27 weiter zur Abtriebswelle 19 geleitet.

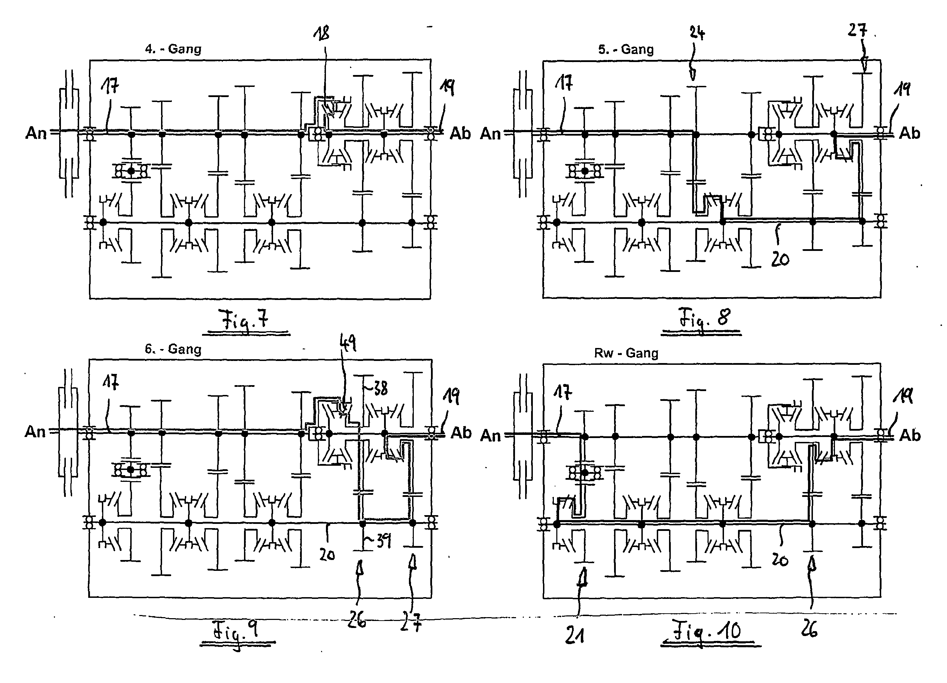

Vollständigkeitshalber ist in Figur 10 noch der Rückwärtsgang dargestellt. Bei eingelegtem Rückwärtsgang wird das Drehmoment von der Getriebeeingangswelle 17 über die Radsatzebene 21, welche ein "drittes Zahnrad" bzw. ein "Rückwärtsgangzahnrad" aufweist, auf die Vorgelegewelle 20 und von dort über die Zahnradstufe 26 auf die Abtriebswelle 19 übertragen.

Vergleicht man den Drehmomentenfluss im 0.-ten Gang (Figur 3) und im sechsten Gang (vgl. Figur 9) so fällt auf, dass in beiden Gängen Drehmoment über die Radsatzebene 26 übertragen wird. Während in 0.-ten Gang Drehmoment vom Zahnrad 39, das drehfest mit der Vorgelegewelle 20 verbunden ist, auf das Zahnrad 38 übertragen wird, das drehbar auf der Abtriebswelle 19 gelagert ist, verläuft der Drehmomentenfluss im sechsten Gang gerade in umgekehrter Richtung über die Zahnradstufe 26. Im sechsten Gang fließt das Drehmoment vom Zahnrad 38 über das Zahnrad 39 auf die Vorgelegewelle 20. Durch diese "Doppelbelegung" einer Zahnradstufe bzw. einer Radsatzebene kann ein herkömmliches Sechsganggetriebe um einen Kriech- bzw. Berganfahrgang erweitert werden, ohne dass eine weitere Radsatzebene benötigt wird. Die für den Normalbetrieb vorgesehenen Vorwärtsgänge 1-6 können also länger und somit kraftstoffsparender ausgelegt werden. Für extreme Fahrsituationen, wie das Anfahren an einer extrem steilen Steigung oder das Anfahren an einer Steigung mit extrem starker Fahrzeugbeladung ist der sehr kurz übersetzte Kriech- bzw. Berganfahrgang, der hier als 0.-ter-Gang bezeichnet wird, vorgesehen.

Zur Betätigung der in den Figuren 2-10 gezeigten Schaltelemente bzw. Schiebemuffen können elektrisch ansteuerbare Aktuatoren vorgesehen sein. Die Aktuatoren werden von einer zentralen Getriebeelektronik angesteuert. Der Fahrerwunsch wird über ein im Fahrgastraum des Fahrzeugs angeordnetes Bedienelement, z. B. einen Schalthebel, Joystick o. ä., der an die Getriebeelektronik angeschlossen ist, vorgegeben.

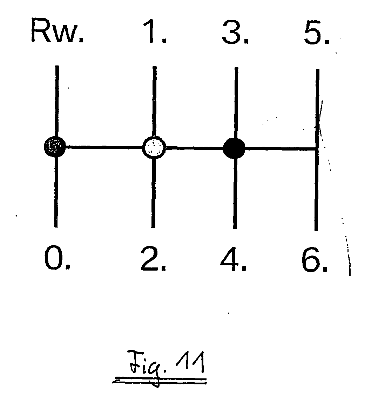

Wie aus den Figuren 2-10 ersichtlich ist, werden die Gangwechsel 1- 2, 3 - 4, 5 - 6 nicht zwingend über jeweils ein Doppelschaltelement ausgeführt. Bei einer mechanischen Kopplung zwischen Bedienelement (Schalthebel im Fahrzeug) und Schaltelement könnte dies problematisch werden, da dann eine aufwändige Schaltmechanik erforderlich wäre. Sofern die Schaltelemente bzw. Schiebemuffen jedoch mittels elektrisch angesteuerter Aktuatoren eingelegt werden, kann dennoch ein "klassisches H-Schaltschema", wie es in Figur 11 dargestellt ist, realisiert werden. Bei diesem Schaltschema sind vier nebeneinander liegende Schaltgassen vorgesehen. In der linken Schaltgasse ist vorne links der Rückwärtsgang und hinten links der Kriech- bzw. Berganfahrgang vorgesehen. Die daneben liegenden Schaltgassen entsprechen denen eines herkömmlichen Sechsgang-Schaltgetriebes, d.h. die Gangpaare 1-2, 3-4, 5-6 liegen jeweils in einer Schaltgasse.

## Patentansprüche

1. Fahrzeuggetriebe (14), das sieben Vorwärtsgänge und einen Rückwärtsgang aufweist, wobei ein erster Vorwärtsgang ein Kriech- bzw. Berggang mit einer großen Übersetzung für geringe Fahrgeschwindigkeiten ist und die übrigen Vorwärtsgänge für normalen Fahrbetrieb vorgesehen sind, mit
- einer Eingangswelle (17),
- einer koaxial zur Eingangswelle angeordneten Ausgangswelle (19),
- einer Nebenwelle (20), die parallel zur Eingangswelle (17) und zur Ausgangswelle (19) angeordnet ist,
- sieben in axial zueinander versetzten Radsatzebenen (21 - 27) angeordnete Zahnradstufen, die durch ein erstes Zahnrad und ein darin eingreifendes zweites Zahnrad gebildet sind, wobei sämtliche Zahnradstufen des Fahrzeuggetriebes (14) jeweils durch ein Zahnrad (28, 30', 32, 34, 36, 39, 41), das drehfest mit der ihm zugeordneten Welle (17, 20) verbunden ist und ein weiteres Zahnrad (29, 30, 33, 35, 37, 38, 40), das drehbar auf der ihm zugeordneten Welle (19, 20) gelagert ist, gebildet sind,
- wobei die weiteren Zahnräder jeweils mittels eines zugeordneten Schaltelements (42, 43, 44, 45, 46, 47, 48, 49) mit der zugeordneten Welle (19, 20) koppelbar sind, und
- wobei in einem vorgegebenen, für normalen Fahrbetrieb vorgesehenen Vorwärtsgang Drehmoment von dem einen Zahnrad (38) einer der Zahnradstufen (26) auf das andere Zahnrad (39) der Zahnradstufe übertragen wird,
**dadurch gekennzeichnet, dass**
bei eingelegtem Kriech- bzw. Berggang Drehmoment in umgekehrter Richtung wie in dem vorgegebenen Vorwärtsgang über die entsprechende Zahnradstufe (26) übertragen wird, nämlich vom anderen Zahnrad (39) auf das eine Zahnrad (38) der Zahnradstufe (26).

2. Fahrzeuggetriebe (14) nach Anspruch 1, **dadurch gekennzeichnet, dass** das bei eingelegtem Kriech- bzw. Berggang Drehmoment von der Eingangswelle (17) über eine erste Zahnradstufe (22) auf die Nebenwelle (20) und von der Nebenwelle (20) über eine zweite Zahnradstufe (26) auf die Abtriebswelle (19) übertragen wird.

3. Fahrzeuggetriebe (14) nach Anspruch 1 oder 2, **dadurch gekennzeichnet, dass** ein Direktgangschaltelement (18) vorgesehen ist, über das die Eingangswelle (17) und die Ausgangswelle (19) miteinander drehgekoppelt werden können.

4. Fahrzeuggetriebe (14) nach Anspruch 2 oder 3, **dadurch gekennzeichnet, dass** in einem der Vorwärtsgänge Drehmoment von der Eingangswelle über die zweite Zahnradstufe (26) auf die Nebenwelle (20) und von der Nebenwelle (20) über eine dritte Zahnradstufe (27) auf die Abtriebswelle (19) übertragen wird.

5. Fahrzeuggetriebe (14) nach einem der Ansprüche 1 bis 4, **dadurch gekennzeichnet, dass** elektrisch ansteuerbare Aktuatoren vorgesehen sind, mit denen die einzelnen Schaltelemente betätigbar sind.

6. Fahrzeuggetriebe (14) nach einem der Ansprüche 1 bis 5, **dadurch gekennzeichnet, dass** ein von einem Fahrer zu betätigendes Betätigungselement vorgesehen ist, welches elektrisch mit einer Getriebeelektronik verbunden ist, wobei die Getriebeelektronik die Aktuatoren entsprechend einer vom Fahrer über das Betätigungselement vorgegebenen Sollschaltstellung ansteuert.

## Claims

1. A vehicle transmission (14) having seven forward gears and one reverse gear, a first forward gear being a crawling or hill gear with a large transmission ratio for low driving speeds and the remaining forward gears being provided for normal driving operation, comprising
- an input shaft (17),
- an output shaft (19) arranged coaxially with the input shaft,
- a auxiliary shaft (20), which is arranged parallel to the input shaft (17) and to the output shaft (19),
- seven gear wheel stages which are arranged in wheel set planes (21
- 27) axially offset with respect to one another and which are formed by a first gear wheel and a second gear wheel engaging therein, all the gear wheel stages of the vehicle transmission (14) in each case being formed by a gear wheel (28, 30', 32, 34, 36, 39, 41), which is non-rotatably connected to the shaft (17, 20) associated with it and a further gear wheel (29, 30, 33, 35, 37, 38, 40), which is rotatably mounted on the shaft (19, 20) associated with it,
- wherein the further gear wheels can each be coupled by means of an associated shifting element (42, 43, 44, 45, 46, 47, 48, 49) to the associated shaft (19, 20), and
- wherein in a predetermined forward gear provided for normal driving operation, torque is transmitted from one gear wheel (38) of one the gear wheel stages (26) to the other gear wheel (39) of the gear wheel stage,
**characterised in that** when the crawling or hill gear is engaged, torque is transmitted in the reverse direction from that in the predetermined forward gear via the corresponding gear wheel stage (26), namely from the other gear wheel (39) to the one gear wheel (38) of the gear wheel stage (26).

2. A vehicle transmission (14) according to claim 1, **characterised in that** when the crawling or hill gear is engaged, torque is transmitted from the input shaft (17) via a first gear wheel stage (22) to the auxiliary shaft (20) and from the auxiliary shaft (20) via a second gear wheel stage (26) to the output shaft (19).

3. A vehicle transmission (14) according to claim 1 or claim 2, **characterised in that** a direct gear shifting element (18) is provided, by means of which the input shaft (17) and the output shaft (19) can be rotationally coupled to one another.

4. A vehicle transmission (14) according to claim 2 or claim 3, **characterised in that** in one of the forward gears, torque is transmitted from the input shaft via the second gear wheel stage (26) to the auxiliary shaft (20) and from the auxiliary shaft (20) via a third gear wheel stage (27) to the output shaft (19).

5. A vehicle transmission (14) according to any one of claims 1 to 4, **characterised in that** electrically activatable actuators are provided, with which the individual shifting elements can be actuated.

6. A vehicle transmission (14) according to any one of claims 1 to 5, **characterised in that** an actuating element to be actuated by a driver is provided, which is electrically connected to a transmission electronics system, the transmission electronics system activating the actuators in accordance with a desired shifting position predetermined by the driver by means of the actuating element.

## Revendications

1. Boîte de vitesses de véhicule (14) comportant six rapports de marche avant et un rapport de marche arrière, un premier rapport de marche avant correspondant à un rapport de marche lente ou de montée en côte avec un grand rapport de démultiplication pour une faible vitesse de déplacement et les autres rapports de marche avant assurant le fonctionnement normal, comprenant :
- un arbre d'entrée (17),
- un arbre de sortie (19) coaxial à l'arbre d'entrée,
- un arbre auxiliaire (20) parallèle à l'arbre d'entrée (17) et à l'arbre de sortie (19),
- sept rapports de pignons dentés installés coaxialement dans des plans décalés de pignons (21-27) formés par un premier pignon et un second pignon en prise avec celui-ci, tous les rapports de pignons de la boîte de vitesses (14) étant reliés par un pignon denté (28, 30', 32, 34, 36, 39, 4 1) solidaire de l'arbre (17, 20) associé et un autre pignon (29, 30, 33, 35, 37, 38, 40) monté à rotation sur l'arbre (19, 20) associé,
- les seconds pignons dentés étant coupés respectivement par un élément de commutation associé (42, 43, 44, 45, 46, 47, 48, 49) à l'arbre associé (19, 20), et
- dans un rapport de marche avant, prédéfini, prévu pour le déplacement normal, le couple est transmis d'un pignon (38) de l'un des étages de pignons (26) à l'autre pignon (39) de l'étage de pignons,
**caractérisée en ce que**
lorsque le rapport de marche lente ou de circulation en côte est engagé, le couple est transmis dans le sens inverse de celui du rapport de marche avant précédent en passant par l'étage de pignons dentés (26) correspondant à savoir, en passant de l'autre pignon (39) vers un pignon (38) de l'étage de pignons (26).

2. Boîte de vitesses de véhicule (14) selon la revendication 1,
**caractérisée en ce que**
lorsque le rapport de marche lente ou de montée en côte est engagé, le couple de l'arbre d'entrée (17) est transmis par un premier étage de pignons dentés (22) à l'arbre auxiliaire (20) et de l'arbre auxiliaire (20) par un second étage de pignons dentés (26) à l'arbre de sortie (19).

3. Boîte de vitesses de véhicule (14) selon la revendication 1 ou 2,
**caractérisée par**
un élément de commutation de prise directe (18) permettant de relier l'arbre d'entrée (17) et l'arbre de sortie (19) par un couplage solidaire en rotation.

4. Boîte de vitesses de véhicule (14) selon la revendication 2 ou 3,
**caractérisée en ce que**
dans l'un des rapports de marche avant, le couple est transmis de l'arbre d'entrée par l'intermédiaire du second étage de pignons dentés (26) à l'arbre auxiliaire (20) et de l'arbre auxiliaire (20) par l'intermédiaire d'une troisième étape de pignons dentés (27) à l'arbre de sortie (19).

5. Boîte de vitesses de véhicule (14) selon l'une des revendications 1 à 4,
**caractérisée par**
des actionneurs à commande électrique pour actionner les différents éléments de commutation.

6. Boîte de vitesses de véhicule (14) selon l'une des revendications 1 à 5,
**caractérisée par**
un élément d'actionnement commandé par le conducteur, relié électriquement à une électronique de boîte de vitesses,
l'électronique de boîte de vitesses commandant les actionneurs en fonction d'une position de commutation de consigne prédéfinie par le conducteur par l'intermédiaire de l'élément d'actionnement.
